# EUROPEAN PATENT APPLICATION

(11) **EP 2 698 512 A1**
(43) Date of publication of application: **19.02.2014**
(21) Application number: 12771091.1
(22) Date of filing: 27.02.2012
(51) Int. Cl.: F01N 3/023, B01D 53/94, E02F 9/00, B01D 46/42

(54) **EXHAUST GAS PURIFICATION SYSTEM FOR WORKING MACHINE**

(30) Priority: 15.04.2011 JP 2011091571
(71) Applicant: Hitachi Construction Machinery Co., Ltd., Bunkyo-ku Tokyo 112-8563 (JP)
(72) Inventor: SHIBAMORI Kazuhiro, Tsuchiura-shi Ibaraki 300-0013 (JP); WATANABE Yutaka, Tsuchiura-shi Ibaraki 300-0013 (JP); TSUKADA Hidenobu, Tsuchiura-shi Ibaraki 300-0013 (JP); NAKAMURA Keiichiro, Tsuchiura-shi Ibaraki 300-0013 (JP); KIMURA Akira, Tsuchiura-shi Ibaraki 300-0013 (JP); GOTOU Yuuki, Tsuchiura-shi Ibaraki 300-0013 (JP); FUJIEDA Kouta, Tsuchiura-shi Ibaraki 300-0013 (JP)
(74) Representative: Beetz & Partner
(86) International application number: PCT/JP2012/054820
(87) International publication number: WO 2012/140962

(57) **Abstract**

The invention provides an exhaust purification system for working machine. The system reliably issues filter regeneration warnings to the operator, prompting manual regeneration, so that damage to the DPF device can be avoided.

When a PM estimate becomes higher than a given value, a screen (6a) displays a warning message prompting manual regeneration. If the warning message failed to prompt the operator to perform manual regeneration and reference time t1 has passed since the display of the warning message, a speaker (6c) outputs a first warning sound. When the operator notices the first warning sound and turns on a regeneration switch (38), regeneration control is started. If the operator fails to notice the first warning sound and reference time t2 has passed since the display of the warning message, the speaker (6c) instead outputs a second warning sound louder than the first warning sound. When the operator notices the second warning sound and turns on the regeneration switch (38), regeneration control is started.

## Description

### Technical Field

The present invention relates to exhaust purification systems for working machine and particularly to an exhaust purification system that uses a filter to capture the particulate matter contained in exhaust for purifying the exhaust and prompts the operator to start manual filter regeneration so that the particulate matter captured by the filter can be burnt off and removed.

### Background Art

Working machine (e.g., hydraulic excavators) has a diesel engine as its power source. The particulate matter (PM) discharged from the diesel engine and other hazardous substances such as NOx, CO, and HC are subject to severer emission regulations year by year. Such being the case, there exists an exhaust purification system that uses a diesel particulate filter (DPF) to capture particulate matter, thereby reducing PM emission. Such a system burns the particulate matter captured by the filter to prevent its clogging, thereby regenerating the filter. Otherwise, an increase in the PM accumulated on the filter may clog the filter, which increases the exhaust temperature of the engine and deteriorates fuel efficiency.

Filter regeneration is often performed with the use of an oxidation catalyst. The catalyst is positioned upstream of the filter or directly supported by the filter or both. In either case, activating the catalyst requires exhaust temperature to be higher than the activation temperature of the catalyst. When exhaust temperature is sufficiently high, the filter self-regenerates, but there are also cases where exhaust temperature is too low for self-regeneration and where self-regeneration is not enough for burning particulate matter. In such cases, compulsory regeneration is employed to raise exhaust temperature above the activation temperature of the catalyst. Methods of compulsory regeneration include one in which fuel injection is performed during the expansion stroke after main fuel injection into the engine cylinder; one in which fuel is injected into the exhaust gas within the exhaust pipe with the use of a fuel injector disposed within the exhaust pipe; one in which the engine load is increased by raising the engine speed; and one in which the engine load is increased by utilizing the hydraulic load effect.

Compulsory filter regeneration also includes automatic regeneration in which regeneration is started automatically and manual regeneration in which regeneration is started by the operator. Automatic regeneration is performed when an estimated amount of accumulated PM reaches a threshold or when a given amount of time has passed. If automatic regeneration is not performed properly, the accumulation of particulate matter may proceed.

Patent Document 1 discloses a technique related to manual regeneration in which a warning is issued to the operator (e.g., via a warning lamp) to prompt manual regeneration. When the operator turns on the regeneration switch, regeneration is started.

During the excavation work by a hydraulic excavator, the operator may fail to notice a warning prompting manual regeneration if he is too focused on the work. Moreover, if he places high priority on the completion of the work, he may ignore the manual regeneration warning. If manual regeneration is not performed after the warning, the accumulation of PM will proceed. Eventually, the in-filter temperature may increase excessively due to the combustion of a large amount of PM, damaging the DPF device.

In the technique of Patent Document 1, the form of a warning is changed based on an estimated amount of accumulated PM. At first, a warning lamp flashes slowly, but when the DPF device is more likely to be damaged due to an increased amount of PM, the warning lamp starts to flash quickly. While the technique of Patent Document 1 is related to automobiles in general, it is also applicable to working machine such as hydraulic excavators. With the technique of Patent Document 1, the operator can recognize the urgency of the necessity of manual regeneration by noticing warning changes. By the operator then performing manual regeneration properly, damage to the DPF device can be avoided.

### Prior Art Literature

### Patent Document

Patent Document 1: JP,A 2005-299403

### Summary of the Invention

### Problem to be Solved by the Invention

In filter regeneration, whether automatic or manual, the amount of accumulated PM is often estimated by detecting the differential pressure across the filter and then performing calculations based on the differential pressure. Thus, the accuracy of control based on an estimated amount of accumulated PM depends on the accuracy of that PM estimate. In other words, when the PM estimate has errors, warnings cannot be changed properly. When a PM estimate is higher than the actual PM amount and warnings are changed based on that estimate, the error causes no problems. However, when a PM estimate is lower than the actual PM amount and warnings are changed based on that estimate, judgment associated with the alteration of the warnings may be delayed. This delay could be an indirect cause of DPF breakage because manual regeneration cannot be performed properly (i.e., the start of the manual regeneration is delayed).

An object of the present invention is to provide an exhaust purification system for working machine that reliably issues filter regeneration warnings to the operator, prompting manual regeneration, so that damage to the DPF device can be avoided.

### Means for Solving the Problem

(1) To achieve the above object, the present invention provides an exhaust purification system for working machine, the system comprising: a filter, located in an exhaust system of an engine, for capturing particulate matter contained in exhaust; a regeneration device for burning off particulate matter accumulated on the filter to regenerate the filter; a regeneration controller for starting or stopping the operation of the regeneration device; a regeneration switch for instructing the regeneration controller to start regeneration; and warning means for prompting an operator to turn on the regeneration switch. The system further comprises status judging means for judging the status of the working machine, and the warning means includes a warning altering function for altering the content of warnings based on the amount of time during which the status judging means judges the working machine to be in operation since a first warning.
(2) To achieve the above object, the invention also provides an exhaust purification system for working machine, the system comprising: a filter, located in an exhaust system of an engine, for capturing particulate matter contained in exhaust; a regeneration device for burning off particulate matter accumulated on the filter to regenerate the filter; a regeneration controller for starting or stopping the operation of the regeneration device; a regeneration switch for instructing the regeneration controller to start regeneration; and warning means for prompting an operator to turn on the regeneration switch. The system further comprises status judging means for judging the status of the working machine, and the warning means includes a warning sound output function for outputting warning sounds and a warning sound altering function for altering the warning sounds when the amount of time during which the status judging means judges the working machine to be in operation exceeded reference times after a first warning.
   In conventional techniques, the content of a warning is changed based on an estimated amount of accumulated PM. Thus, if the estimate has errors, the warning may not be changed properly. In contrast, changing warning sounds based on elapsed time as above allows the warning sounds to be changed more reliably without being affected by PM estimation errors, and by the operator noticing the warning sounds and performing manual regeneration, damage to the DPF device can be avoided.
(3) In the above system of (2), in the event that the status judging means judges the working machine to be in operation, the status judging means further judges whether the working machine is in standby status or work-in-progress status and wherein the warning sound altering function sets different reference times depending on the standby status or the work-in-progress status.
   During standby status, more particulate matter may be accumulated than during work-in-progress status. Thus, during standby status, changing warning sounds based on the reference times for work-in-progress status may delay judgment associated with the alteration of the warning sounds. Therefore, during standby status, warning sounds are changed based on the reference times for standby status, thereby preventing the judgment from being delayed and ensuring a reliable alternation of warning sounds.
(4) In the above system of (3), the working machine comprises: an engine speed detector; a work-performing structure; operating levers for controlling the operation of the work-performing structure; a gate lock lever movable between an unlock position that enables the operation of the operating levers and a lock position that disables the operation of the operating levers; and a pilot pressure sensor for detecting pilot pressures generated by the operating levers. The status judging means judges the working machine to be in the standby status in the event that the engine speed detector has detected a speed higher than a low idle speed and that the gate lock lever is in the lock position. On the other hand, the status judging means judges the working machine to be in the work-in-progress status in the event that the engine speed detector has detected a speed higher than the low idle speed, that the gate lock lever is in the unlock position, and that the pilot pressure sensor has detected a pressure higher than a given value.
   The above allows the warning sound altering function to change warning sounds based on the reference times for work-in-progress status during work-in-progress status and based on the reference times for standby status during standby status.
(5) In the above system of (2), the warning sound altering function alters at least either one of the following: the volume, tone, length, and repeat count of the warning sounds.
   With such alteration of the warning sounds, it becomes more likely for the operator to notice the sounds.
(6) To achieve the above object, the invention further provides an exhaust purification system for working machine, the system comprising: a filter, located in an exhaust system of an engine, for capturing particulate matter contained in exhaust; PM estimating means for estimating the amount of particulate matter accumulated on the filter; a regeneration device for burning off the particulate matter accumulated on the filter to regenerate the filter; a regeneration controller for starting or stopping the operation of the regeneration device; a regeneration switch for instructing the regeneration controller to start regeneration; and warning means for prompting an operator to turn on the regeneration switch. The warning means includes a warning sound output function for outputting warning sounds and a warning sound altering function for altering the warning sounds based on the PM amount estimated by the PM estimating means.

### Effect of the Invention

In accordance with the invention, filter regeneration warnings can be issued to the operator in a more reliable manner, and with proper manual regeneration, damage to the DPF device can be avoided.

### Brief Description of the Drawings

FIG. 1 illustrates the overall configuration of an exhaust purification system according to Embodiment 1;
FIG. 2 illustrates the hydraulic circuit employed in a hydraulic excavator;
FIG. 3 is an external view of the hydraulic excavator;
FIG. 4 illustrates the functional blocks of a controller;
FIG. 5 is a flowchart illustrating the calculations performed by the controller;
FIG. 6 illustrates a problem associated with Embodiment 1; and
FIG. 7 illustrates an advantage of Embodiment 2.

### Mode for Carrying out the Invention

### Embodiment 1

Embodiment 1 of the present invention will now be described with reference to the accompanying drawings.

### Configuration

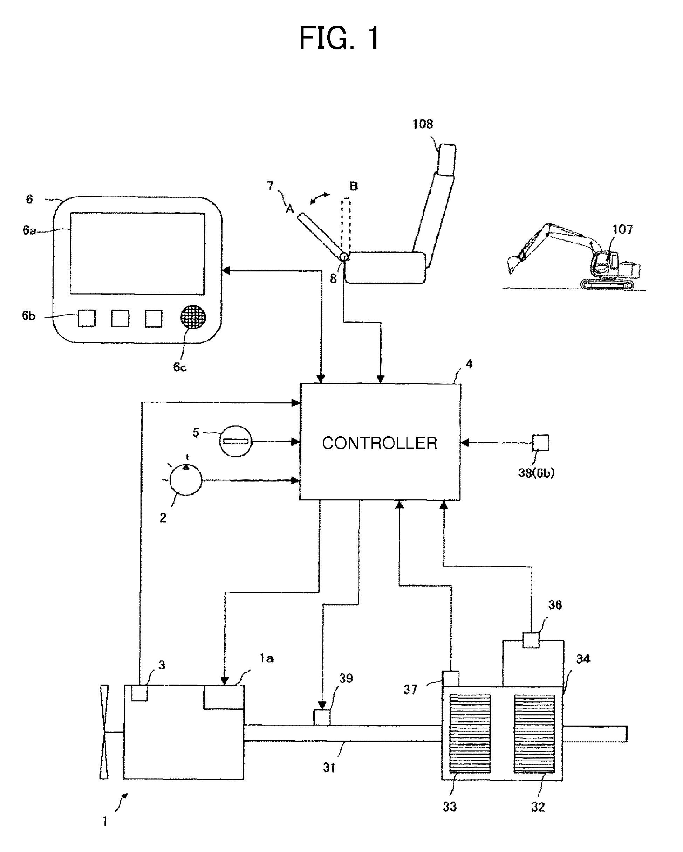

FIG. 1 illustrates the overall configuration of an exhaust purification system for working machine according to Embodiment 1.

The working machine of FIG. 1 (a hydraulic excavator being shown as an example) has a diesel engine 1 installed. The diesel engine 1 includes an electronic governor 1a, an electronic device for controlling fuel injection. A target speed of the engine 1 is set by an engine control dial 2, and the actual speed of the engine 1 is detected by a speed detector 3. A controller 4 receives a command signal from the engine control dial 2 and a speed signal from the speed detector 3 and controls the electronic governor 1a based on the command signal (indicative of the target speed) and the speed signal (indicative of the actual speed), thereby controlling the speed and torque of the engine 1.

A key switch 5 is used to start or stop the engine 1. The controller 4 also receives a command signal from the key switch 5 and controls the start and stop of the engine 1 based on that signal. The key switch 5 also acts as a device for starting or stopping power supply for the controller 4 and a display device 6.

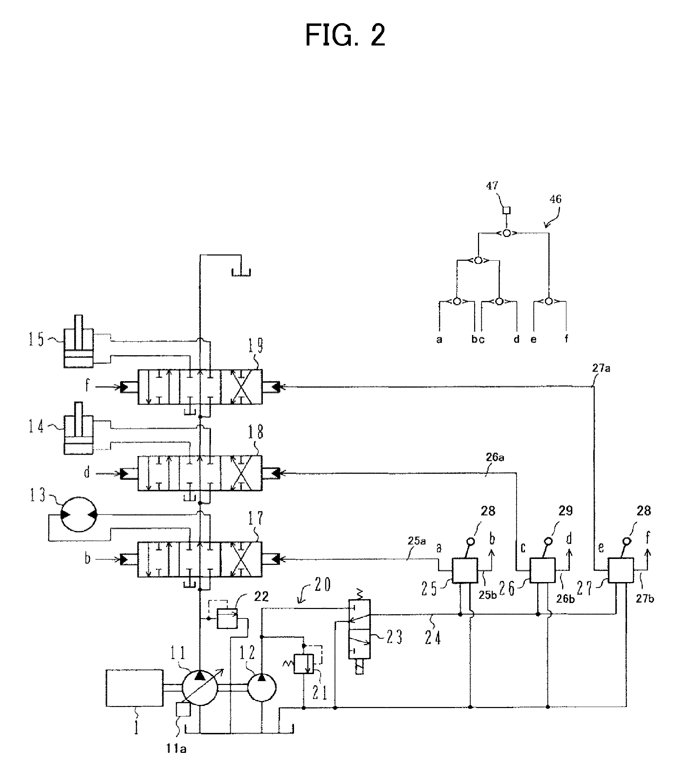

Operating levers 28 and 29 (see FIG. 2) and a gate lock lever 7 are installed within the cab 107 of the hydraulic excavator. The gate lock lever 7 can be moved between position A (unlock position) that closes the entrance to a cab seat 108 and position B (lock position) that opens the entrance to the cab seat 108. The gate lock lever 7 includes a position detector 8 for detecting the position of the lever 7.

The exhaust purification system is installed on the exhaust pipe 31 of the engine 1. The system includes the following components: a DPF device 34 including a filter 32 for capturing the particulate matter contained in exhaust and an oxidation catalyst 33 located upstream of the filter 32; a differential pressure detector 36 for detecting the differential pressure across the filter 32 (i.e., pressure loss across the filter 32); an exhaust temperature detector 37, located upstream of the filter 32, for detecting exhaust temperature; a regeneration switch 38 for starting filter regeneration; and a fuel injector 39, located within the exhaust pipe 31 (i.e., between the engine 1 and the DPF device 34), for increasing the exhaust temperature. The oxidation catalyst 33 and the fuel injector 39 constitute a filter regeneration device that burns off the particulate matter accumulated on the filter 32.

The regeneration switch 38 is located at an easily accessible position within the cab 107 of the hydraulic excavator. The operator uses the regeneration switch 38 to start the regeneration of the filter 32. When turned on, the regeneration switch 38 outputs a command signal that starts the regeneration of the filter 32. The regeneration switch 38 may instead be an icon displayed on the display device 6. In either case, the regeneration switch is operated for the operator to turn it on or off.

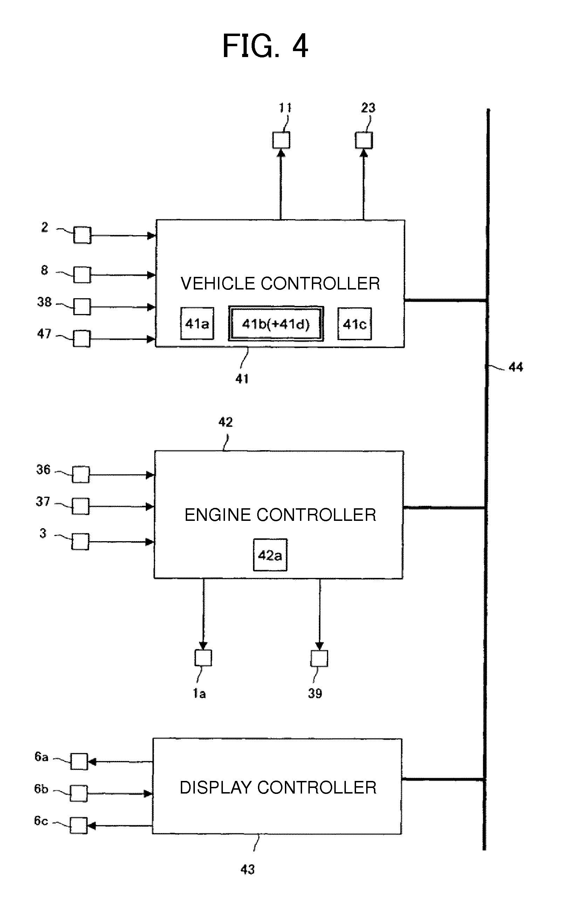

The display device 6 is located at an easily viewable position within the cab 107 of the hydraulic excavator and designed to show basic vehicle information such as remaining fuel, coolant temperature, and so on. The display device 6 includes a screen 6a, control switches 6b, and a speaker 6c, and its operation is controlled by the display controller 43 (see FIG. 4) of the controller 4. The control switches 6b are located below the screen 6a. By the operator operating the switches 6b, the screen 6a can display information other than the basic vehicle information. The screen 6a and the control switches 6b serve as an interface, allowing the operator to operate the switches 6b while viewing the screen 6a for changing various vehicle-related settings.

The display device 6 also displays regeneration-related information such as the status of automatic regeneration, a warning prompting the operation of the regeneration switch 38, and so forth. The speaker 6c can output such information in the form of voice.

In the present embodiment, the speaker 6c outputs warning sounds when manual regeneration is not being done properly (described later in detail).

FIG. 2 illustrates the hydraulic circuit employed in the construction machine (e.g., hydraulic excavator). The hydraulic circuit includes the following components: a variable-displacement hydraulic pump 11 (i.e., main pump) and a fixed-displacement pilot pump 12 both driven by the engine 1; a hydraulic motor 13 and hydraulic cylinders 14 and 15 (i.e., hydraulic actuators) driven by the hydraulic fluid discharged from the hydraulic pump 11; pilot flow-rate control valves 17 to 19 for controlling the flow (i.e., flow rate and direction) of the hydraulic fluid fed from the hydraulic pump 11 to the hydraulic motor 13 and the hydraulic cylinders 14 and 15; a pilot relief valve 21 for maintaining the pressure of the hydraulic fluid discharged from the pilot pump 12 at a constant value (the pilot relief valve 21 constituting a pilot hydraulic pressure source 20); a main relief valve 22 for determining an upper limit to the discharge pressure of the hydraulic pump 11; a solenoid valve 23 connected to the downstream side of the pilot hydraulic pressure source 20 and turned on or off depending on the position of the gate lock lever 7 located at the entrance to the cab seat; and remote control valves 25, 26, and 27, connected to a pilot hydraulic line 24 located downstream of the solenoid valve 23, for generating, based on the hydraulic pressure of the pilot hydraulic pressure source 20, control pilot pressures a to f to control the flow-rate control valves 17 to 19.

The hydraulic pump 11 includes a regulator 11a for controlling the tilt of the hydraulic pump 11 (i.e., the tilt of the swash plate, hence the displacement volume of the pump 11) based on the discharge pressure of the pump 11 so that the absorption torque (consumption torque) of the pump 11 will not exceed a given maximum absorption torque.

The remote control valves 25, 26, and 27 are controlled by the operating levers 28 and 29 installed at the right and left sides of the cab seat 108 (see FIG. 1). The operating levers 28 and 29 can be moved crosswise. Moving the operating lever 28 in the directions of one line of a cross operates the remote control valve 25 while moving the operating lever 28 in the directions of the other line of the cross operates the remote control valve 27. Likewise, moving the operating lever 29 in the directions of one line of a cross operates the remote control valve 26 while moving the operating lever 29 in the directions of the other line of the cross operates another remote control valve not illustrated. When the operating lever 28 is moved in the two directions of one line of a cross, moving the lever 28 in one of the two directions from its neutral position causes the remote control valve 25 to generate the control pilot pressure a while moving the lever 28 in the other direction causes the remote control valve 25 to generate the control pilot pressure b. The control pilot pressures a and b are directed to the associated pressure receivers of the flow-rate control valve 17 through pilot lines 25a and 26b, thereby moving the flow-rate control valve 17 from its neutral position.

Similarly, when the operating lever 28 is moved in the two directions of the other line of the cross, moving the lever 28 in one of the two directions from the neutral position causes the remote control valve 27 to generate the control pilot pressure e while moving the lever 28 in the other direction causes the remote control valve 27 to generate the control pilot pressure f. The control pilot pressures e and f are directed to the associated pressure receivers of the flow-rate control valve 19 through pilot lines 27a and 27b, thereby moving the flow-rate control valve 19 from its neutral position. Likewise, when the operating lever 29 is moved in the two directions of one line of a cross, moving the lever 29 in one of the two directions from its neutral position generates the control pilot pressure c while moving the lever 29 in the other direction generates the control pilot pressure d. The control pilot pressures c and d are directed to the associated pressure receivers of the flow-rate control valve 18 through pilot lines 26a and 26b, thereby moving the flow-rate control valve 18 from its neutral position.

The hydraulic circuit further includes shuttle valves 46 and a pressure sensor 47. The shuttle valves 46 are designed to extract the highest pressure among the control pilot pressures a to f of the remote control valves 26 to 27 and the control pilot pressures of other operating units. The pressure sensor 47 is connected to the output port of the shuttle valve 46 located furthest downstream and used to detect the highest control pilot pressure to detect the operation of an operating lever or unit.

The control pilot pressures a to f are allowed to flow or blocked depending on the position of the gate lock lever 7.

When the gate lock lever 7 is placed in position A (see FIG. 1), the solenoid of the solenoid valve 23 is excited, shifting the solenoid valve 23 from the position of FIG. 2 and directing the hydraulic pressure of the pilot hydraulic pressure source 20 to the remote control valves 25, 26, and 27. This allows the remote control valves 25, 26, and 27 to control the flow-rate control valves 17 to 19. When the gate lock lever 7 is raised to position B (see FIG. 1), the solenoid of the solenoid valve 23 becomes inactive, shifting the solenoid valve 23 to the position of FIG. 2 and disconnecting the pilot hydraulic pressure source 20 from the remote control valves 25, 26, and 27. This prevents the remote control valves 25, 26, and 27 from controlling the flow-rate control valves 17 to 19. In other words, when the gate lock lever 7 is in position B, the remote control valves 25, 26, and 27 (control lever units) are locked, and lowering the gate lock lever 7 to position A unlocks the valves 25, 26, and 27. Shifting the position of the solenoid valve 23 by the gate lock lever 7 can be achieved by, for example, installing a switch between the solenoid of the solenoid valve 23 and its power source. When the gate lock lever 7 is in position A, that switch is turned on (closed state) to excite the solenoid. When the gate lock lever 7 is in position B, the switch is turn off (open state) to make the solenoid inactive.

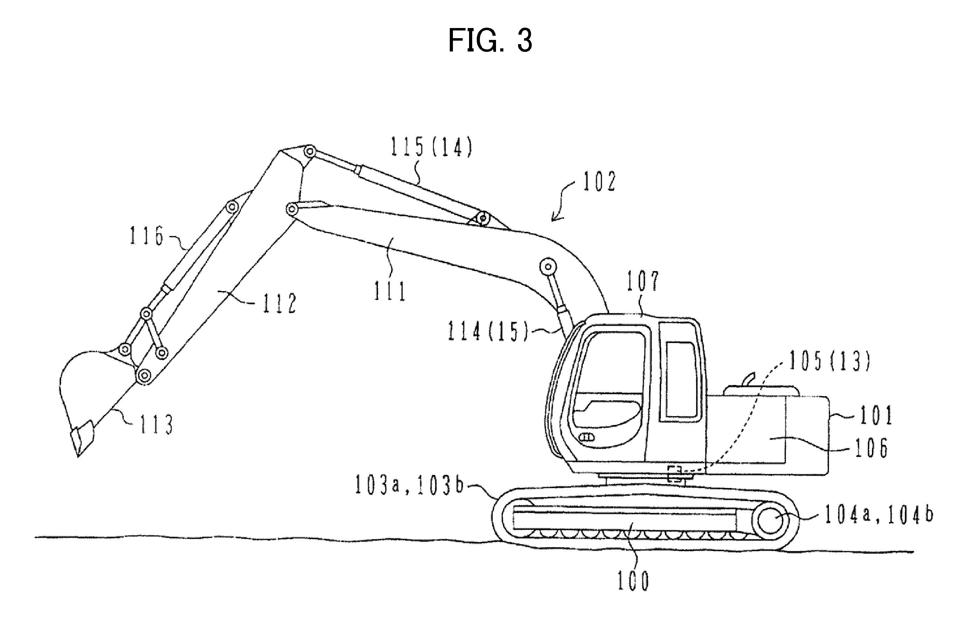

FIG. 3 is an external view of the hydraulic excavator. The excavator includes a lower carrier structure 100, an upper swing structure 101, and a front shovel structure 102. The lower carrier structure 100 includes crawler belts 103a and 103b driven by travel motors 104a and 104b, respectively. The upper swing structure 101 is mounted on the lower structure 100 in a swingable manner via a swing motor 105. The front shovel structure 102 is attached to the front end of the upper structure 101 in a vertically rotatable manner. The upper swing structure 101 has an engine room 106 and the cab 107 mounted thereon. The engine 1 is installed within the engine room 106, and the gate lock lever 7 (see FIG. 1) is installed at the entrance to the cab seat 108 of the cab 107. Installed at the left and right sides of the cab seat 108 are the control lever units housing the remote control valves 25, 26, and 27 (see FIG. 2).

The front shovel structure 102 is a multi-joint structure including a boom 111, an arm 112, and a bucket 113. The boom 111 is rotated vertically by the expansion and contraction of a boom cylinder 114. The arm 112 is rotated upward or downward and forward or backward by the expansion and contraction of an arm cylinder 115. The bucket 113 is rotated upward or downward and forward or backward by the expansion and contraction of a bucket cylinder 116.

The hydraulic motor 13 and hydraulic cylinders 14 and 15 of FIG. 2 could be, for example, the swing motor 105, the arm cylinder 115, and the boom cylinder 114, respectively. While the hydraulic drive system of FIG. 2 further includes other hydraulic actuators and control valves for the motors 104a and 104b, the bucket cylinder 116, and the like, FIG. 2 does not illustrate such components.

It should be noted that the working machine to which the invention is applied may instead be a wheel loader or a wheel-mounted hydraulic excavator.

### Control

FIG. 4 illustrates the functional blocks of the controller 4. The controller 4 includes a vehicle controller 41, an engine controller 42, and a display controller 43. These controllers are mutually connected via a communication line 44, forming a vehicle network. The vehicle controller 41 receives command signals from the engine control dial 2, detection signals from the position detector 8 and the pressure sensor 47, and command signals from the regeneration switch 38 while the engine controller 42 receives detection signals from the speed detector 3, the differential pressure detector 36, and the exhaust temperature detector 37.

The vehicle controller 41 is designed to control overall vehicle operation including the hydraulic drive system. For instance, the vehicle controller 41 controls the regulator 11a of the hydraulic pump 11, thereby controlling the discharge pressure and discharge flow-rate of the pump 11. The vehicle controller 11 also performs switch control of the solenoid valve 23 for gate locking.

The engine controller 42 receives a command signal from the engine control dial 2 through the communication line 44. The engine controller 42 uses this command signal and a signal from the speed detector 3 to control the speed and torque of the engine 1.

The engine controller 42 also receives a signal from the differential pressure detector 36 to estimate the amount of accumulated particulate matter and performs calculations for regeneration control based on the estimate. Based on the calculations, the engine controller 42 then controls the electronic governor 1a and the fuel injector 39 (automatic regeneration control).

The display controller 43 receives various signals and the calculations results through the communication line 44 and transmits display signals to the display device 6 so that such information can be displayed on the screen 6a. If necessary, voice signals are transmitted to the speaker 6c. The display controller 43 also allows the input of command signals from the control switches 6b, part of the user interface.

The engine controller 42 includes a manual regeneration function 42a. The manual regeneration function 42a receives a signal from the differential pressure detector 36 to estimate the amount of accumulated particulate matter and transmits a warning signal to the display controller 43 based on the estimation. The manual regeneration function 42a further receives a command signal from the regeneration switch 38 via the communication line 44 and then controls the electronic governor 1a and the fuel injector 39 (manual regeneration control).

A feature of the present embodiment is that the vehicle controller 41 includes a status judgment function 41a, a warning sound altering function 41b, and a memory 41c.

The status judgment function 41a judges the status of the hydraulic excavator (whether it is in operation or not). When it is in operation, the status judgment function 41a further judges whether it is in a standby status or work-in-progress status.

The status judgment function 41a receives a signal from the speed detector 3 through the communication line 44. When the actual engine speed exceeds a low idle speed, the status judgment function 41a judges the excavator to be in operation. When, on the other hand, the actual engine speed is less than the low idle speed, the status judgment function 41a judges the excavator not to be in operation.

When the excavator is judged to be in operation, the status judgment function 41a receives signals from the position detector 8 and the pressure sensor 47. When the gate lock lever 7 is in the lock position, the status judgment function 41a judges the excavator to be in a standby status. When, on the other hand, the gate lock lever 7 is in the unlock position and the pilot pressure exceeds a given value, the excavator is judged to be in a work-in-progress status.

The warning sound altering function 41b sets reference times t1, t2, and t3 (t1 < t2 < t3) based on the judgment results obtained by the status judgment function 41a. When the results reveal that the excavator is in a standby status, the warning sound altering function 41b reads reference times for standby status from the memory 41c. When the results reveal that the excavator is in a work-in-progress status, the warning sound altering function 41b reads reference times for work-in-progress status from the memory 41c. The reference times t1, t2, and t3 for standby status are shorter than the reference times t1, t2, and t3 for work-in-progress status, respectively.

After receiving a warning signal from the manual regeneration function 42a, the warning sound altering function 41b starts time measurement from that point of time.

When the elapsed time exceeds the reference time t1 for standby status (or for work-in-progress status), the warning sound altering function 41b reads the voice data of a first warning sound from the memory 41c and outputs the data to the display controller 43 in the form of a voice signal. When the elapsed time exceeds the reference time t2 for standby status (or for work-in-progress status), the warning sound altering function 41b then reads the voice data of a second warning sound from the memory 41c and outputs the data to the display controller 43 in the form of a voice signal. When the elapsed time exceeds the reference time t3 for standby status (or for work-in-progress status), then, the warning sound altering function 41b reads the voice data of a third warning sound from the memory 41c and outputs the data to the display controller 43 in the form of a voice signal.

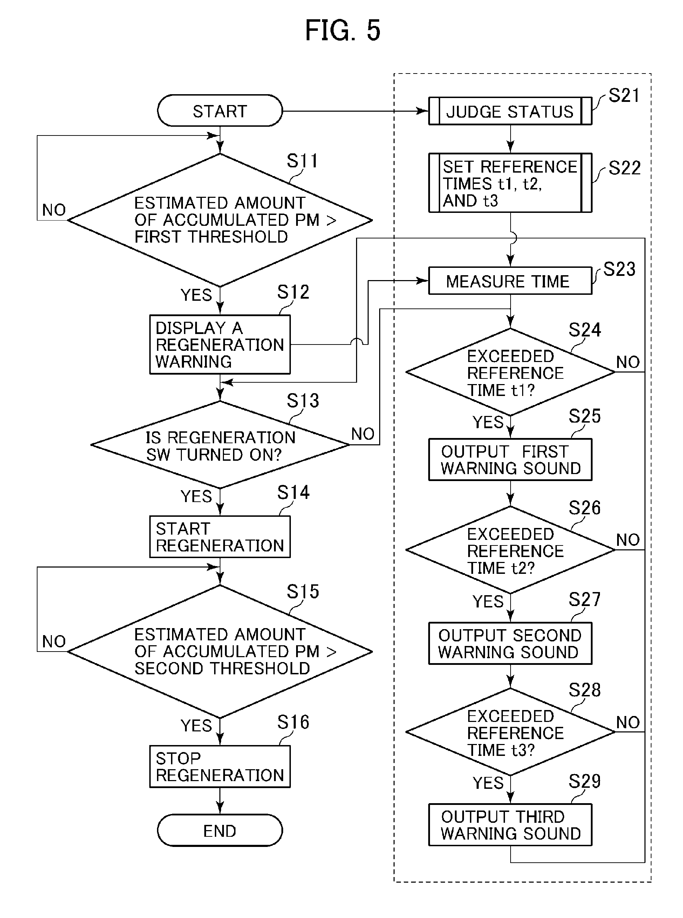

FIG. 5 is a flowchart illustrating the calculations performed by the controller 4.

We describe the manual regeneration control first. Note that while the manual regeneration control is performed in parallel with the automatic regeneration control, we describe only the former control for simplification purposes.

The controller 4 first judges whether or not the amount of particulate matter estimated based on a signal from the differential pressure detector 36 is greater than a first threshold, a value indicative of the necessity of manual regeneration (Step S11). If not, Step S11 is repeated until the estimated amount becomes greater than the first threshold.

After judging the estimated amount to be greater than the first threshold in Step S11, the controller 4 outputs a warning signal to prompt the operator to turn on the regeneration switch 38. This causes the screen 6a to display a warning prompting manual regeneration (Step S12).

The controller 4 then judges whether the regeneration switch 38 has been turned on or not (Step S13). If not, the warning continues to be displayed until the regeneration switch 38 is turned on. During that time, the controller 4 also performs warning sound control (described later in detail).

After judging the regeneration switch 38 to be turned on in Step S13, the controller 4 starts manual regeneration control (Step S13).

The regeneration control can be performed in the following manner. The speed of the engine 1 is first controlled to a given speed Na suitable for compulsory regeneration control. The given speed Na is a middle speed that makes exhaust temperature higher than the activation temperature of the oxidation catalyst 33. In this control, the vehicle controller 41 changes the target speed of the engine 1 from the target speed specified by the engine control dial 2 to the given speed Na and outputs the given speed Na to the engine controller 42 via the communication line 44. The engine controller 42 then performs feedback control on the fuel injection amount of the electronic governor 1a based on the given speed Na and the actual engine speed detected by the speed detector 3, thereby controlling the speed of the engine 1 to the given speed Na.

After the exhaust temperature detected by the exhaust temperature detector 37 increases up to a given value (a temperature higher than the activation temperature of the oxidation catalyst 33), the controller 4 then instructs the fuel injector 39 to inject fuel into the exhaust pipe 31. This allows unburnt fuel components to be supplied to and oxidized by the catalyst 33. The reaction heat obtained from the oxidation increases the exhaust temperature further, burning off the particulate matter accumulated on the filter 32. The exhaust temperature may instead be raised by increasing the engine load by increasing the engine speed or utilizing the hydraulic load effect.

During the regeneration control, the controller 4 judges whether or not the estimated amount of particulate matter is less than a second threshold, a value with which to judge the completion of the regeneration (Step S15). If so, the manual regeneration control is terminated (Step S16). If not, the regeneration control is continued until the estimated amount becomes less than the second threshold.

When the regeneration control is terminated, the target engine speed is set back to the target speed specified by the engine control dial 2 (i.e., low idle speed), and the operation of the fuel injector 39 is stopped. Alternatively, it is also possible to halt the engine 1 in place of setting the target engine speed back to the target speed specified by the engine control dial 2 (i.e., low idle speed).

Described next is warning sound control.

The status of the hydraulic excavator is judged in advance (Step S21). Based on the results (whether the excavator is in a standby status or work-in-progress status), the controller 4 sets the reference times t1, t2, and t3 for standby status or for work-in-progress status (Step S22).

After a warning is displayed to prompt manual regeneration in Step S12, the controller 4 starts time measurement from that point of time (Step S23).

The controller 4 first judges whether the elapsed time has exceeded the reference time t1 (Step S24). If not, Steps S13 and S24 are repeated until the regeneration switch 38 is turned on or until the elapsed time exceeds the reference time t1. When the elapsed time exceeds the reference time t1, the controller 4 outputs a first warning sound (Step S25).

The controller 4 then judges whether the elapsed time has exceeded the reference time t2 (Step S26). If not, Steps S13, S24, and S25 are repeated until the regeneration switch 38 is turned on or until the elapsed time exceeds the reference time t2, thus continuing the output of the first warning sound. When the elapsed time exceeds the reference time t2, a second warning sound is output in place of the first warning sound (Step S27).

The controller 4 further judges whether the elapsed time has exceeded the reference time t3 (Step S28). If not, Steps S13 and S24 to S27 are repeated until the regeneration switch 38 is turned on or until the elapsed time exceeds the reference time t3, thus continuing the output of the second warning sound. When the elapsed time exceeds the reference time t3, a third warning sound is output in place of the second warning sound (Step S29).

After judging the regeneration switch 38 to be turned on in Step S13, the controller 4 starts manual regeneration control (Step S13). If, on the other hand, a particular amount of time has passed since the output of the third warning sound and regeneration has not been started yet, the controller 4 prohibits the regeneration (not illustrated). This is because an excessive amount of accumulated particulate matter may burn abruptly, increasing the filter temperature excessively and damaging the filter.

### Terms used in claims

Step S12 performed by the manual regeneration function 42a, the display controller 43, and the screen 6a of the present embodiment constitute "warning means" for prompting the operation of the regeneration switch 38.

The speed detector 3, the position detector 8, the pressure sensor 47, and Step S21 performed by the status judgment function 41a constitute "status judging means" for judging the status of working machine.

Steps S23 to S29 performed by the warning sound altering function 41b constitute "warning sound altering function" for altering warning sounds when the amount of time during which the working machine is being judged to be in operation exceeded reference times after the display of a warning prompting manual regeneration.

### Operation

(1) Now described is the basic operation of the exhaust purification system of Embodiment 1.

While the excavator is in operation, automatic regeneration control is performed. However, the accumulation of particulate matter proceeds if the automatic regeneration control is not performed properly for some reason. When the accumulated PM amount becomes higher than a first threshold, a warning message is displayed on the screen 6a to prompt manual regeneration. Regeneration control is started by the operator turning on the regeneration switch 38. After the accumulated PM is burnt and the accumulated PM amount becomes smaller than a second threshold, the regeneration control is stopped (the process flows from S11 to S12, to S13, to S14, to S15, and to S16).

During the excavation work by the hydraulic excavator, the operator may fail to notice a warning prompting manual regeneration if he is too focused on the work. Moreover, if he places high priority on the completion of the work, he may ignore the manual regeneration warning. If manual regeneration is not performed after the warning, the accumulation of PM will proceed. Eventually, the in-filter temperature may increase excessively due to the combustion of a large amount of PM, damaging the DPF device.

Therefore, when the elapsed time since the display of the manual regeneration warning exceeds the reference time t1 (but not the reference time t2), the speaker 6c outputs a first warning sound (e.g., three, short, low-volume beep sounds). When the operator notices the first warning sound and turns on the regeneration switch 38, regeneration control is started (the process flows from S12to S23, to S24, to S25, to S26, to S13, and to S14).

However, because the excavator's work may often coincide with other construction work at the construction site, the noise may prevent the operator from noticing the first warning sound. Thus, when the elapsed time since the display of the manual regeneration warning exceeds the reference time t2 (but not the reference time t3), the speaker 6c instead outputs a second warning sound (e.g., five, long, medium-volume, low-pitched beep sounds). When the operator notices the second warning sound and turns on the regeneration switch 38, regeneration control is started (the process flows from S25to S26, to S27, to S28, to S13, and to S14).

If manual regeneration is not performed after the second warning sound, it is prompted with a louder sound. When the elapsed time since the display of the manual regeneration warning exceeds the reference time t3, the speaker 6c instead outputs a third warning sound (e.g., a continuous, large-volume, lower-pitched beep sound). When the operator notices the third warning sound and turns on the regeneration switch 38, regeneration control is started (the process flows from S25to S26, to S27, to S28, to S13, and to S14).

If manual regeneration is not performed after the third warning sound and a particular amount of time has passed since the third warning sound, regeneration is prohibited. This is because an excessive amount of accumulated particulate matter may burn abruptly, increasing the filter temperature excessively and damaging the filter.

The above basic operation of the exhaust purification system is based on the assumption that the hydraulic excavator is in work-in-progress status. When the excavator is judged to be in work-in-progress status, the reference times t1, t2, and t3 for work-in-progress status are set (S21 to S22).
(2) Next described is the operation of the exhaust purification system when the excavator is put on standby.

One of the tasks of the hydraulic excavator is to load excavated soil onto dump trucks. The soil is often gathered at a single location for the excavator to load it onto waiting dump trucks. The dump trucks are used to transport the soil to another location. When the dump trucks are small in number, the excavator has to wait longer for a next dump to come.

When the hydraulic excavator is in standby status, the exhaust temperature decreases drastically. Thus, self-regeneration and automatic regeneration may not be performed properly, resulting in further accumulation of particulate matter compared with work-in-progress status.

Accordingly, when the excavator is judged to be in standby status, the reference times t1, t2, and t3 for standby status are set (S21 to S22). The reference times t1, t2, and t3 for standby status are shorter than the reference times t1, t2, and t3 for work-in-progress status, respectively. This means that the first, second, and third warning sounds output during standby status are output earlier than those output during work-in-progress status. When the operator notices one of the warning sounds and turns on the regeneration switch 38, regeneration control is started.
(3) When the engine 1 is halted during the output of any of the warning sounds, all control is halted as well. In that case, the elapsed time measured thus far is stored on the memory 41c. When the key switch 5 is operated again to start the supply of power to the controller 4, the display device 6, and so forth, the elapsed time stored last will be read from the memory 41c, and a warning sound is also output before the start-up of the engine 1.

### Advantages

(1) When the elapsed time since the display of a manual regeneration warning is short and the DPF device is less likely to be damaged (than in the cases described below), the first warning sound, or a low-volume beep sound, is output. Since the volume of the first warning sound is low, the operator will not find it annoying. By the operator noticing the first warning sound and performing proper manual regeneration, damage to the DPF device can be avoided.
   When manual regeneration is not performed after the output of the first warning sound and the elapsed time becomes longer, the DPF device is more likely to be damaged. In that case, the speaker 6c outputs the second warning sound (louder than the first) and the third warning sound (louder than the second). Since the second and third warning sounds are louder beep sounds, the operator will notice them easily. By the operator then performing proper manual regeneration, damage to the DPF device can be avoided.
(2) In conventional techniques, the content of a warning is changed based on an estimated amount of accumulated PM. Thus, if the estimate has errors, the warning may not be changed properly. Especially, when the estimate is smaller than the actual amount and a warning is changed based on that estimate, judgment associated with the alteration of the warning may be delayed. This delay could be an indirect cause of DPF breakage because manual regeneration cannot be performed properly (i.e., the start of the manual regeneration is delayed).
   In the present embodiment, by contrast, warning sounds are changed based on elapsed time. This allows the warning sounds to be changed more reliably without being affected by PM estimation errors, and by the operator noticing the warning sounds and performing manual regeneration, damage to the DPF device can be avoided.
(3) While the hydraulic excavator is designed to do excavation work and its work-in-progress status often lasts a long period of time, it may occasionally be put on standby for a long time depending on the work. During standby status, more particulate matter may be accumulated than during work-in-progress status. Thus, changing warning sounds based on the reference times for work-in-progress status may delay judgment associated with the alteration of the warning sounds.

Therefore, in the present embodiment, warning sounds are changed based on the reference times for standby status while the excavator is put on standby. This allows the warning sounds to be changed more reliably without the associated judgment being delayed. In that case as well, by the operator noticing the warning sounds and performing manual regeneration, damage to the DPF device can be avoided.

### Modifications

(1) The present embodiment uses three warning sounds: the first warning sound (e.g., three, short, low-volume, midrange beep sounds), the second warning sound (e.g., five, long, medium-volume, low-pitched beep sounds), and the third warning sound (e.g., a continuous, large-volume, lower-pitched beep sound). The first warning sound is changed to the second warning sound, and the second warning sound is changed to the third warning sound. Note however that this is meant to be an example, and the volume, tone, length, or number of the warning sounds can be changed as desired.
(2) While, in the present embodiment, a warning message prompting manual regeneration is displayed (Step S12) based on the PM amount estimated by the differential pressure detector 36, it can instead be based on the elapsed time since the start of excavation work so that PM estimation errors will not affect the timing of the warning display.
(3) While, in the present embodiment, the warning sounds are changed based on the elapsed time since the display of a warning message, they can instead be changed based on an estimated PM amount if the estimate is highly accurate.
(4) While, in the present embodiment, the warning sounds are changed based the elapsed time, it is also possible to change a warning message displayed on the screen 6a into ones attracting more attention.

### Embodiment 2

### Problem associated with Embodiment 1

Described below is the operation of the exhaust purification system of Embodiment 1 when the excavator is shifted from standby status back to work-in-progress status during the control by the system. During standby status, more particulate matter is accumulated than during work-in-progress status. Assume that the excavator is shifted back to work-in-progress status and that the reference times t1, t2, and t3 for work-in-progress status are set again. In that case, using the reference times t1, t2, and t3 for work-in-progress status based on the elapsed time measured during standby status results in the alteration of warning sounds being delayed.

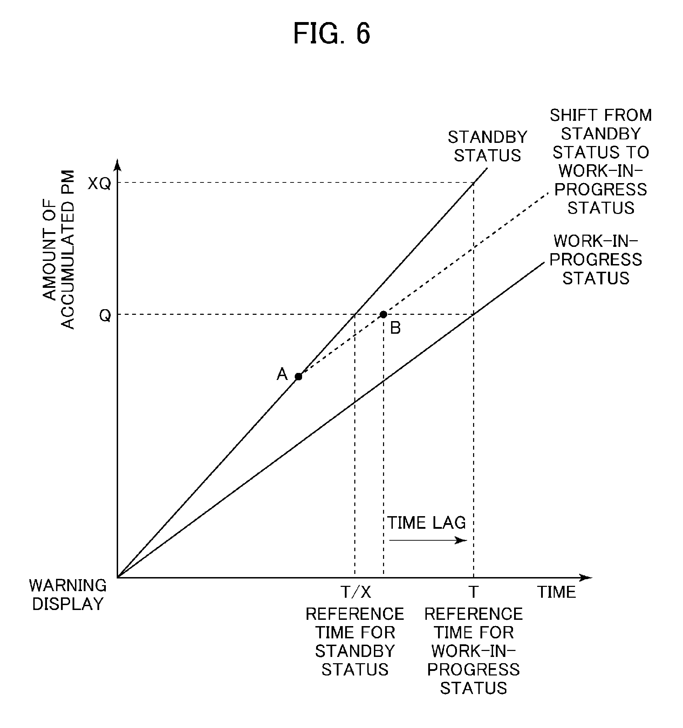

This is discussed in greater detail with reference to FIG. 6. FIG. 6 is a graph illustrating the problem resulting from the different reference times set for standby status and work-in-progress status. The horizontal axis represents time while the vertical axis represents the amount of accumulated PM. The threshold Q represents the accumulated PM amount at which warning sounds should be changed, and the reference time T for work-in-progress status represents the time at which warning sounds should be changed during work-in-progress status. The lower solid line represents the accumulation of PM during work-in-progress status. During standby status, particulate matter is assumed to be accumulated X times as much as during work-in-progress status (X being a positive number greater than 1). The upper solid line represents the accumulation of PM during standby status. Thus, the reference time T/X for standby status (i.e., the time at which the threshold Q is reached during standby status) is calculated by multiplying the reference time T for work-in-progress status by the reciprocal of X (i.e., 1/X).

The dotted line represents the accumulation of PM when the excavator is shifted from standby status to work-in-progress status at Point A. When the excavator is judged to be in work-in-progress status at Point A, the reference time T for work-in-progress status is set again. However, the PM amount reaches the threshold Q at Point B before the measured time reaches the reference time T for work-in-progress status. This means that changing warning sounds after the reference time T for work-in-progress status has been reached is too late.

### Configuration and advantages of Embodiment 2

In Embodiment 2, the warning sound altering function 41b of Embodiment 1 is allowed to have an elapsed-time converting function 41d (see FIG. 4).

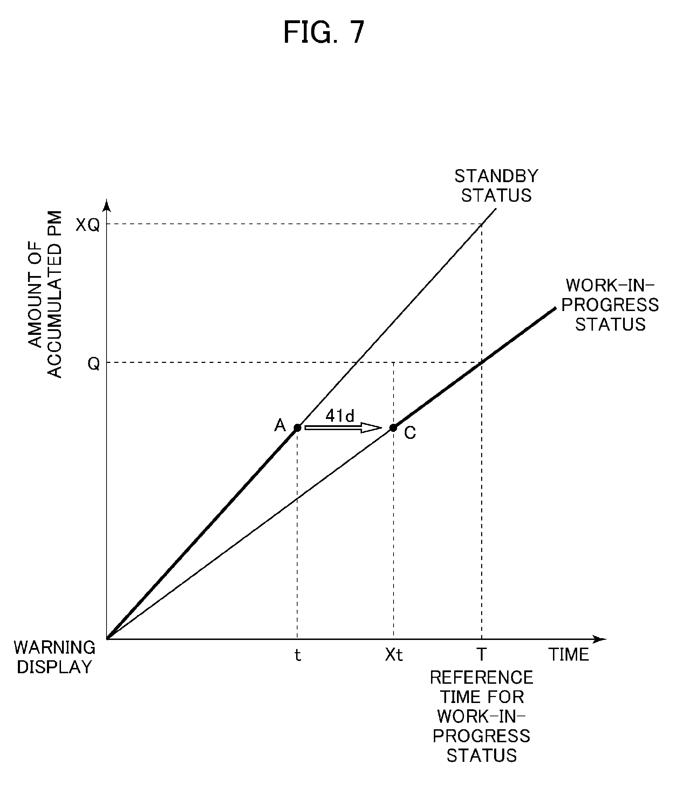

FIG. 7 is a graph illustrating how the elapsed-time converting function 41d works. Similar to FIG. 6, FIG. 7 illustrates a case where the excavator is shifted from standby status to work-in-progress status at Point A, and the elapsed time at Point A is denoted by t.

The elapsed-time converting function 41d calculates Point C on the line that represents the PM accumulation during work-in-progress status such that it becomes equal to the PM amount at Point A. In FIG. 7, the converted elapsed time at Point C is denoted by Xt. The converted elapsed time Xt is obtained by assuming that the excavator has been in work-in-progress status.

When the elapsed time measured is t, the warning sound altering function 41b coverts the time t into the converted elapsed time Xt, followed by the continuation of time measurement from the time Xt. When the elapsed time reaches the reference time T for work-in-progress status (i.e., the time at which the threshold Q is reached), warning sounds are changed.

The elapsed-time converting function 41d of Embodiment 2 prevents warning sound alteration judgment from being delayed when the excavator is shifted from standby status back to work-in-progress status, thus ensuring a reliable alternation of warning sounds. By the operator noticing the warning sounds and performing manual regeneration properly, damage to the DPF device can be avoided.

If, on the other hand, the excavator is shifted from work-in-progress status back to standby status, the elapsed-time converting function 41d instead calculates converted elapsed time t/X when the elapsed time measured is t.

### Description of Reference Numerals

- 1:: Diesel engine
- 1a:: Electronic governor
- 2:: Engine control dial
- 3:: Speed detector
- 4:: Controller
- 5:: Key switch
- 6:: Display device
- 6a:: Screen
- 6b:: Control switch
- 6c:: Speaker
- 7:: Gate lock lever
- 8:: Position detector
- 11:: Hydraulic pump
- 12:: Pilot pump
- 13:: Hydraulic motor
- 14, 15:: Hydraulic cylinder
- 17 to 19:: Flow-rate control valve
- 20:: Pilot hydraulic pressure source
- 21:: Pilot relief valve
- 22:: Main relief valve
- 23:: Solenoid valve
- 24:: Pilot hydraulic line
- 25, 26, 27:: Remote control valve
- 28, 29:: Operating lever
- 31:: Exhaust pipe
- 32:: Filter
- 33:: Oxidation catalyst
- 34:: DPF device
- 36:: Differential pressure detector
- 37:: Exhaust temperature detector
- 38:: Regeneration switch
- 39:: Fuel injector
- 41:: Vehicle controller
- 41a:: Status judgment function
- 41b:: Warning sound altering function
- 41c:: Memory
- 41d:: Elapsed-time converting function (Embodiment 2)
- 42:: Engine controller
- 42a:: Manual regeneration function
- 43:: Display controller
- 44:: Communication line
- 46:: Shuttle valve
- 47:: Pressure sensor
- 100:: Lower carrier structure
- 102:: Front shovel structure
- 103a, 103b:: Crawler belt
- 104a, 104b:: Travel motor
- 105:: Swing motor
- 106:: Engine room
- 107:: Cab
- 108:: Cab seat
- 111:: Boom
- 112:: Arm
- 113:: Bucket
- 114:: Boom cylinder
- 115:: Arm cylinder
- 116:: Bucket cylinder

## Claims

1. An exhaust purification system for working machine, the system comprising:
a filter (32), located in an exhaust system of an engine (1), for capturing particulate matter contained in exhaust;
a regeneration device (33, 39) for burning off particulate matter accumulated on the filter to regenerate the filter;
a regeneration controller (42) for starting or stopping the operation of the regeneration device;
a regeneration switch (38) for instructing the regeneration controller to start regeneration; and
warning means (6a, 42a, 43) for prompting an operator to turn on the regeneration switch,
wherein the system further comprises status judging means (3, 8, 41a, 47) for judging the status of the working machine and
wherein the warning means includes a warning altering function (41b) for altering the content of warnings based on the amount of time during which the status judging means judges the working machine to be in operation since a first warning.

2. An exhaust purification system for working machine, the system comprising:
a filter (32), located in an exhaust system of an engine (1), for capturing particulate matter contained in exhaust;
a regeneration device (33, 39) for burning off particulate matter accumulated on the filter to regenerate the filter;
a regeneration controller (42) for starting or stopping the operation of the regeneration device;
a regeneration switch (38) for instructing the regeneration controller to start regeneration; and
warning means (6a, 42a, 43) for prompting an operator to turn on the regeneration switch,
wherein the system further comprises status judging means (3, 8, 41a, 47) for judging the status of the working machine and
wherein the warning means includes a warning sound output function (6c) for outputting warning sounds and a warning sound altering function (41b) for altering the warning sounds after the amount of time during which the status judging means judges the working machine to be in operation has exceeded reference times since a first warning.

3. The exhaust purification system of claim 2
wherein in the event that the status judging means judges the working machine to be in operation, the status judging means further judges whether the working machine is in standby status or work-in-progress status, and
wherein the warning sound altering function sets different reference times depending on the standby status or the work-in-progress status.

4. The exhaust purification system of claim 3
wherein the working machine comprises:
an engine speed detector (3);
a work-performing structure;
operating levers (28, 29) for controlling the operation of the work-performing structure;
a gate lock lever (7) movable between an unlock position that enables the operation of the operating levers and a lock position that disables the operation of the operating levers; and
a pilot pressure sensor (47) for detecting pilot pressures generated by the operating levers,
wherein the status judging means judges the working machine to be in the standby status in the event that the engine speed detector has detected a speed higher than a low idle speed and that the gate lock lever is in the lock position, and
wherein the status judging means judges the working machine to be in the work-in-progress status in the event that the engine speed detector has detected a speed higher than the low idle speed, that the gate lock lever is in the unlock position, and that the pilot pressure sensor has detected a pressure higher than a given value.

5. The exhaust purification system of claim 2
wherein the warning sound altering function alters at least either one of the following: the volume, tone, length, and repeat count of the warning sounds.

6. An exhaust purification system for working machine, the system comprising:
a filter (32), located in an exhaust system of an engine (1), for capturing particulate matter contained in exhaust;
PM estimating means (36, 42) for estimating the amount of particulate matter accumulated on the filter;
a regeneration device (33, 39) for burning off the particulate matter accumulated on the filter to regenerate the filter;
a regeneration controller (42) for starting or stopping the operation of the regeneration device;
a regeneration switch (38) for instructing the regeneration controller to start regeneration; and
warning means (6a, 42a, 43) for prompting an operator to turn on the regeneration switch,
wherein the warning means includes a warning sound output function (6c) for outputting warning sounds and a warning sound altering function (41b) for altering the warning sounds based on the PM amount estimated by the PM estimating means.

## Amended claims

### Amended claims under Art. 19.1 PCT

1. deleted

2. deleted

3. amended as below
An exhaust purification system for working machine, the system comprising:
a filter (32), located in an exhaust system of an engine (1), for capturing particulate matter contained in exhaust;
a regeneration device (33, 39) for burning off particulate matter accumulated on the filter to regenerate the filter;
a regeneration controller (42) for starting or stopping the operation of the regeneration device;
a regeneration switch (38) for instructing the regeneration controller to start regeneration; and
warning means (6a, 42a, 43) for prompting an operator to turn on the regeneration switch,
wherein the system further comprises status judging means (3, 8, 41a, 47) for judging the status of the working machine,
wherein the warning means includes a warning sound output function (6c) for outputting warning sounds and a warning sound altering function (41b) for altering the warning sounds after the amount of time during which the status judging means judges the working machine to be in operation has exceeded reference times since a first warning,
wherein in the event that the status judging means judges the working machine to be in operation, the status judging means further judges whether the working machine is in standby status or work-in-progress status, and
wherein the warning sound altering function sets different reference times depending on the standby status or the work-in-progress status.

4. The exhaust purification system of claim 3
wherein the working machine comprises:
an engine speed detector (3);
a work-performing structure;
operating levers (28, 29) for controlling the operation of the work-performing structure;
a gate lock lever (7) movable between an unlock position that enables the operation of the operating levers and a lock position that disables the operation of the operating levers; and
a pilot pressure sensor (47) for detecting pilot pressures generated by the operating levers,
wherein the status judging means judges the working machine to be in the standby status in the event that the engine speed detector has detected a speed higher than a low idle speed and that the gate lock lever is in the lock position, and
wherein the status judging means judges the working machine to be in the work-in-progress status in the event that the engine speed detector has detected a speed higher than the low idle speed, that the gate lock lever is in the unlock position, and that the pilot pressure sensor has detected a pressure higher than a given value.

5. amended as below
The exhaust purification system of claim 3
wherein the warning sound altering function alters at least either one of the following: the volume, tone, length, and repeat count of the warning sounds.

6. deleted

Statement under Art. 19.1 PCT
Claims 1, 2, and 6 have been deleted.

Due to the deletion of claim 2, claim 3 has been changed into an independent claim.

Due to the deletion of claim 2, a minor format change has been made to claim 5.

Claim 4 is unchanged.

Claims 1, 2, and 6 have been deleted.

Due to the deletion of claim 2, claim 3 has been changed into an independent claim.

Due to the deletion of claim 2, a minor format change has been made to claim 5.

Claim 4 is unchanged.
